(19) **Europäisches Patentamt / European Patent Office / Office européen des brevets**

(11) **EP 4 153 851 B1**

(12) **FASCICULE DE BREVET EUROPEEN**

(45) Date de publication et mention de la délivrance du brevet:
**10.12.2025 Bulletin 2025/50**

(21) Numéro de dépôt: **21732462.3**

(22) Date de dépôt: **17.05.2021**

(51) Classification Internationale des Brevets (IPC):
**F02C 7/22** *(2006.01)*     **B64D 37/02** *(2006.01)*
**G01F 1/86** *(2006.01)*

(52) Classification Coopérative des Brevets (CPC):
**F02C 7/22; B64D 37/28; G01F 1/86;** F05D 2260/60;
F05D 2260/80; F05D 2270/306; Y02T 50/60

(86) Numéro de dépôt international:
**PCT/FR2021/050849**

(87) Numéro de publication internationale:
**WO 2021/234257 (25.11.2021 Gazette 2021/47)**

(54) **PROCÉDÉ POUR DÉTERMINER DES CARACTÉRISTIQUES D'UN CARBURANT ALIMENTANT UN MOTEUR D'AÉRONEF**

VERFAHREN ZUR BESTIMMUNG DER EIGENSCHAFTEN EINES EINEM FLUGZEUGMOTOR ZUGEFÜHRTEN KRAFTSTOFFS

METHOD FOR DETERMINING CHARACTERISTICS OF A FUEL SUPPLIED TO AN AIRCRAFT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2020 FR 2004965**

(43) Date de publication de la demande:
**29.03.2023 Bulletin 2023/13**

(73) Titulaire: **Safran Aerosystems**
**78370 Plaisir (FR)**

(72) Inventeurs:
- **HAUZERAY, Sylvain**
  **77550 Moissy-Cramayel (FR)**
- **DELAITRE, Gilles**
  **77550 Moissy-Cramayel (FR)**

(74) Mandataire: **Regimbeau**
**20, rue de Chazelles**
**75847 Paris Cedex 17 (FR)**

(56) Documents cités:
**EP-A2- 3 023 751     US-A- 3 739 635**
**US-B1- 8 515 694**

**Description**

DOMAINE DE L'INVENTION

L'invention concerne l'identification des caractéristiques du carburant à bord des aéronefs, en particulier des avions.

ETAT DE LA TECHNIQUE

Il est connu que, pour garantir l'autonomie d'un avion en vol, son système de jaugeage estime la masse de carburant embarquée à tout instant, au sol et en vol. La précision de l'estimation dépend de la quantité et de la précision des capteurs utilisés mais aussi des grandeurs physiques mesurées. Le système de jaugeage vise à obtenir la précision requise dans la mesure de la masse de carburant embarquée, et cela dans les conditions de stockage dans les réservoirs. Mais pour le pilote, la masse de carburant disponible n'est pas un indicateur suffisant. Il a besoin de connaitre l'autonomie restante de son avion. Pour faire ce changement d'indicateur, les performances du moteur doivent être considérées, mais celles-ci sont dépendantes des caractéristiques du carburant utilisé. En outre, pour ajuster la cartographie d'injection du carburant dans les moteurs, le calculateur de contrôle moteur pourrait utiliser les mesures du système de jaugeage, mais dans les faits cela n'est pas suffisant car les conditions de stockage dans les réservoirs et les conditions d'injection sont très différentes.

Ces difficultés sont dues notamment au fait que les caractéristiques du carburant en cours d'utilisation ne sont pas complétement connues. Pour y pallier, l'injection du carburant dans le moteur est réalisée de façon à garantir les objectifs de performance et de sécurité, mais sans prendre en compte l'optimisation de la consommation. En d'autres termes, l'injection a lieu avec une marge qui engendre une surconsommation.

Cette problématique va s'accentuer du fait de l'utilisation croissante de bio-carburants, augmentant la variabilité des caractéristiques des carburants utilisés par les aéronefs. En effet, cette surconsommation existe déjà en utilisant du kérosène standard, mais elle augmentera avec l'utilisation des bio-carburants avec des taux d'incorporation variables qui peuvent aller jusqu'à 100%. Cela générera une variabilité plus grande dans les caractéristiques des carburants, qu'il faudra prendre en compte en augmentant les marges de surconsommation pour continuer à garantir la sécurité des vols.

Il est donc souhaitable que le système de jaugeage fournisse au calculateur de contrôle moteur l'ensemble des caractéristiques du carburant lui permettant de garantir les performances et la sécurité du vol en réduisant autant que possible cette marge.

Pour cette raison, on cherche à estimer plus précisément les caractéristiques du carburant.

A cette fin, il est connu que le système de jaugeage intègre un capteur de mesure de caractéristiques de carburant, dans le ou les réservoirs. Cette caractérisation est faite en considérant la température du carburant.

En effet, on considère que la relation entre la masse volumique du carburant et sa température est une fonction linéaire. Cette fonction tracée pour différents types de carburants donne des droites relativement parallèles entre elles. Il en va de même de la relation entre la constante diélectrique (K, aussi appelée permittivité relative $e_r$) et la température. Et on connait aussi la relation entre la constante diélectrique K et la masse volumique D. Cette dernière s'exprime par une formule dérivée de la formule générique dite de Clausius-Mossotti :

$$D = (K-1)/[A+B(K-1)]$$

Ces relations sont connues par exemple du document US- 8 515 694 qui montre aussi les graphes de ces fonctions.

Toutes ces informations sont suffisantes lorsqu'il s'agit de déterminer la masse de carburant embarquée, mais pas pour prédire les caractéristiques du carburant à la température d'injection dans les moteurs.

Pour cela, ces caractéristiques sont estimées de façon plus ou moins précise en fonction de la présence et le cas échéant du type de capteur situé sur la conduite d'alimentation du moteur en carburant. Les différentes configurations possibles sont les suivantes :

1) Pas de capteur : l'injection est réalisée en prenant en compte toutes les disparités possibles du carburant.
2) Mesure de température : l'injection est optimisée par rapport à la température d'injection, en prenant toujours en compte la disparité des carburants.
3) En plus de la mesure de température, la mesure de la permittivité diélectrique permet de réduire la disparité à prendre en compte.
4) La configuration optimale serait la mesure de masse volumique, mais sa mise en application est très difficile, du fait des technologies de mesure de masse volumique et des conditions de mesure locale (température, vibrations).

La quantité de carburant injectée est mesurée le plus souvent par un débitmètre volumique, et quelques fois par un débitmètre massique mais ce dernier a une précision très variable en fonction du débit. En connaissant l'estimation des caractéristiques du carburant et en prenant en compte les marges de sécurité nécessaires, l'injection dans le moteur est régulée par l'utilisation du débitmètre volumique ou massique. La mesure de débit volumique est assez précise, mais ne prend pas en compte les caractéristiques du carburant, contrairement à la mesure de débit massique qui prend bien en compte la masse volumique du carburant, mais qui a une précision de mesure moindre.

Un but de l'invention est donc de mieux connaître les caractéristiques du carburant injecté dans le moteur pour en effectuer le dosage avec plus de précision.

Le document US2016/0123860 concerne l'art antérieur de la présente invention.

EXPOSE DE L'INVENTION

A cet effet, on prévoit un procédé pour déterminer des caractéristiques d'un carburant alimentant un moteur d'aéronef, procédé dans lequel, à bord de l'aéronef, on met en œuvre les étapes suivantes dans l'ordre suivant :

- on mesure une première valeur de masse volumique, une première valeur de constante diélectrique, et une première valeur de température du carburant à un premier instant ;
- on mesure une deuxième valeur de masse volumique, une deuxième valeur de constante diélectrique et une deuxième valeur de température du carburant à un deuxième instant choisi de sorte que les première et deuxième valeurs de température soient différentes ;
- à partir des premières et deuxièmes valeurs, on détermine des paramètres d'au moins une fonction permettant de calculer une masse volumique à partir d'une température ou d'une constante diélectrique ;
- on mesure une valeur de débit volumique et au moins l'une parmi une troisième valeur de température et une troisième valeur de constante diélectrique du carburant dans une conduite d'injection du carburant dans le moteur ;
- en tenant compte de la troisième valeur ou de l'une au moins des troisièmes valeurs, et d'au moins une des fonctions, on détermine une valeur de masse volumique du carburant, et
- à partir des valeurs de débit volumique et de masse volumique, on détermine un débit massique du carburant dans la conduite d'injection.

Ainsi, cet enchainement d'étapes permet de bien connaître les caractéristiques du carburant en cours d'injection dans le moteur et donc de mieux contrôler la quantité de carburant à injecter.

En effet, à un premier stade, les deux premières étapes de mesure sont effectuées à des instants où les températures du carburant sont différentes. Elles permettent donc d'obtenir à la troisième étape les paramètres d'au moins une des trois fonctions précitées, notamment celles permettant de calculer une masse volumique à partir d'une température ou d'une constante diélectrique. C'est notamment le cas pour la formule de Clausius-Mossotti en permettant de déterminer les paramètres A et B. Tout ou partie des caractéristiques générales du carburant sont donc connues.

Ensuite, à un deuxième stade, la mesure du débit volumique, de la constante diélectrique et/ou de la température permet de déterminer une valeur de sa masse volumique dans la conduite d'injection, avant son injection dans le moteur. Et comme on détermine le débit massique à cet endroit, on peut injecter une quantité de carburant répondant aux impératifs de performance et de sécurité en limitant la quantité de carburant surconsommée, c'est-à-dire sans marge excessive.

Comme ce deuxième stade est mis en œuvre sur la conduite d'injection, notamment à la température effective à laquelle le carburant est injecté, la quantité de carburant injectée est déterminée en tenant compte étroitement de ses caractéristiques à cet endroit et donc avec une précision particulièrement bonne.

Avantageusement, on mesure les première et deuxième valeurs de masse volumique au moyen d'un même capteur de masse volumique, les première et deuxième valeurs de constante diélectrique au moyen d'un même capteur de constante diélectrique, et les première et deuxième valeurs de température au moyen d'un même capteur de température.

Ainsi, les mesures des deux premières étapes sont effectuées exactement au même endroit et le nombre d'organes de mesure reste réduit. Comme les mesures sont effectuées par les mêmes organes, on évite l'accumulation d'imprécisions de mesure qui pourraient sinon survenir en utilisant différents organes aux premier et deuxième instants.

On peut prévoir que, après le premier instant et avant le deuxième instant, on met en œuvre une étape engendrant une modification d'une température du carburant dans une chambre où sont effectuées les mesures aux premier et deuxième instants.

Une telle étape entraine une modification volontaire de la température entre les deux instants. Cela permet d'éviter une période de temps trop longue entre les deux instants, comme ce serait le cas si on s'en remettait à une modification de température se produisant pour une autre raison. On obtient donc la ou les lois de caractérisation du carburant à l'issue d'une période courte.

L'étape engendrant la modification de la température pourrait être mise en œuvre en chauffant le carburant dans l'enceinte, sans introduire du carburant dans l'enceinte.

Dans un mode de réalisation, on introduit, dans l'enceinte, du carburant provenant du système d'injection de carburant dans le moteur.

Il s'agit d'une façon particulièrement efficace d'obtenir le changement de température précité.

Cette injection de carburant venant du moteur dans l'enceinte permet d'obtenir plusieurs effets suivant la configuration de l'enceinte :

- mode échangeur : il ne se produit pas de mélange de carburant mais seulement un échange de calories pour changer la température ;
- mode mélange : les deux liquides se mélangent de sorte que la température change en fonction de leurs taux respectifs dans le mélange ;
- mode remplacement : le liquide entrant repousse le liquide présent en prenant sa place ; et
- mode mixte : il s'agit d'un mélange de deux ou trois des modes précédents.

Le troisième mode est celui qui offre le temps de transition le plus court.

On pourra notamment utiliser une chambre comme celle du document WO 2018/002682.

Pour mettre en œuvre le mode échangeur de façon stricte, il faut un pur échangeur thermique. Mais de façon générale, sans isolation thermique, il y a forcément des échanges thermiques.

Le mode mélange est le plus intuitif.

Le mode remplacement est proche de celui du document WO2018/002682 mais ce mode est difficile à mettre en œuvre de façon stricte. Dans la réalité, il y a un peu de mélange et d'échange thermique, mais cela est très efficace, bien plus que le mode mélange. Le liquide entrant dans l'enceinte prend la place du précédent, quelles que soient leurs températures et leurs densités respectives. C'est la structure de l'enceinte détaillée dans WO2018/002682 qui permet cet effet.

On peut prévoir qu'on met en œuvre les deux premières étapes du procédé de l'invention dans un réservoir de carburant.

Il s'agit d'un endroit particulièrement approprié pour faire les mesures en question. Mais on peut envisager de faire ces mesures à un autre endroit, par exemple sur une conduite faisant passer le carburant du réservoir au système d'injection.

Avantageusement, on détermine des paramètres d'une fonction permettant de calculer une constante diélectrique en fonction d'une température.

Il peut en effet être intéressant dans certains modes de mise en œuvre de l'invention de connaitre aussi cette loi associée aux caractéristiques du carburant.

Dans un mode de mise en œuvre, on mesure la troisième valeur de température et la troisième valeur de constante diélectrique.

La mesure de ces deux grandeurs permet de disposer d'une redondance, de façon à pouvoir déceler une anomalie ou une panne éventuelle et d'en tenir compte lors de la détermination de la masse volumique du carburant.

Avantageusement, on mesure une quatrième valeur de température du carburant dans la conduite d'injection.

Cette redondance de mesure de température permet elle aussi de détecter une panne ou une anomalie éventuelle et de s'en affranchir. Cela permet de réaliser un test sur les valeurs de température obtenues et par exemple d'écarter une valeur suspecte ou clairement non-fiable.

Une possibilité consiste pour cela à déterminer si une différence entre les troisième et quatrième valeurs de température dépasse un seuil prédéterminé.

Si le seuil est dépassé, cela signifie que l'un au moins des capteurs de température donne une valeur non-fiable. Le seuil est par exemple égal au double de la valeur d'un intervalle de tolérance de la chaine de mesure de la température relative au capteur. Ainsi si cet intervalle est de 0.1°C, le seuil sera par exemple de 0.2.

Avantageusement :

- à partir des troisièmes valeurs respectives et au moyen des fonctions, on calcule des valeurs de test de la masse volumique,
- pour la ou chaque paire de valeurs de test considérées deux à deux, on détermine si une différence entre les valeurs de test dépasse un seuil prédéterminé, et
- on détermine la valeur de masse volumique du carburant en fonction du résultat de cette détermination.

Ainsi, ici encore, disposer de plusieurs valeurs de test assure une redondance qui permet de détecter une anomalie ou une panne et d'en tenir compte. Par exemple, en présence d'une seule paire de valeurs de test, le dépassement du seuil est le signe d'une anomalie. En présence de deux valeurs de test ou plus, on peut choisir de conserver seulement une ou plusieurs des valeurs de test et de ne plus en utiliser une ou plusieurs autres qui sont identifiées comme suspectes. Le résultat de cette comparaison sur les valeurs de test peut aussi être avantageusement combiné à celui sur la comparaison des troisième et quatrième valeurs de température le cas échéant, sachant qu'une ou plusieurs des valeurs de test résulte d'un calcul effectué à partir d'une de ces valeurs de température. Si plusieurs valeurs de test ne présentent pas d'anomalie, on peut utiliser l'une d'elles, ou les utiliser ensemble en en faisant la moyenne par exemple, pour déterminer la valeur de masse volumique à prendre en compte dans la suite du procédé.

Ainsi, dans un mode de réalisation, à l'issue des deux premières étapes précitées, on détermine la valeur de masse volumique sans prendre en compte une, deux ou trois des valeurs de test.

On peut prévoir qu'on détermine la valeur de masse volumique en prenant en compte au moins une autre valeur obtenue lors de la mise en œuvre du procédé de l'invention pour un autre moteur de l'aéronef ou en prenant en compte au moins une autre fonction prédéterminée, notamment sans prendre en compte les valeurs de test.

Dans le premier cas, on s'affranchit donc totalement des valeurs mesurées sur le premier moteur et on continue à utiliser les caractéristiques précises du carburant obtenues avec le procédé mais lors de sa mise en œuvre sur un autre moteur de l'avion.

Dans l'autre cas, la fonction est par exemple une fonction par défaut qui donc ne tient pas compte étroitement des caractéristiques du carburant tel qu'injecté. Il peut s'agir d'une ou plusieurs lois de caractérisation du carburant telles que précitées mais dans une version générale qui n'est pas précisément adaptée au carburant utilisé en l'espèce.

On prévoit également selon l'invention un aéronef comprenant :

- au moins un moteur,
- au moins un réservoir de carburant,
- un système d'injection du carburant dans le moteur, le système d'injection comprenant une conduite d'injection,
- des organes de mesure d'une masse volumique, d'une constante diélectrique et d'une température du carburant, - un débitmètre pour la mesure d'un débit volumique, le débitmètre et au moins un parmi un capteur de température et un capteur de constante diélectrique étant portés par le conduit d'injection, et
- un organe de commande configuré pour commander l'exécution des étapes du procédé selon l'invention.

Dans un mode de réalisation, l'aéronef comprend :

- une chambre située dans le réservoir et comprenant les organes de mesure,
- une conduite d'introduction dans la chambre de carburant provenant du système d'injection, la conduite reliant directement le système d'injection à la chambre, et
- une vanne de la conduite apte à interdire l'introduction dans la chambre, via la conduite, de carburant provenant du système d'injection.

Il s'agit d'un agencement particulièrement bien adapté pour engendrer une augmentation de la température du carburant dans la chambre entre les premier et deuxième instants.

DESCRIPTION DES FIGURES

Nous allons maintenant présenter un mode de réalisation de l'invention à titre d'exemple non-limitatif à l'appui des dessins sur lesquels :

- la figure 1 est un schéma montrant un circuit d'injection d'un aéronef et l'un de ses réservoirs, dans un mode de réalisation de l'invention,
- la figure 2 est une vue plus détaillée du circuit d'injection de l'aéronef de la figure 1,
- les figures 3 à 5 montrent des courbes représentant des fonctions reliant la masse volumique et la constante diélectrique en fonction de la température et de la masse volumique, et
- la figure 6 est un nuage de points représentant un résultat de test du procédé de l'invention.

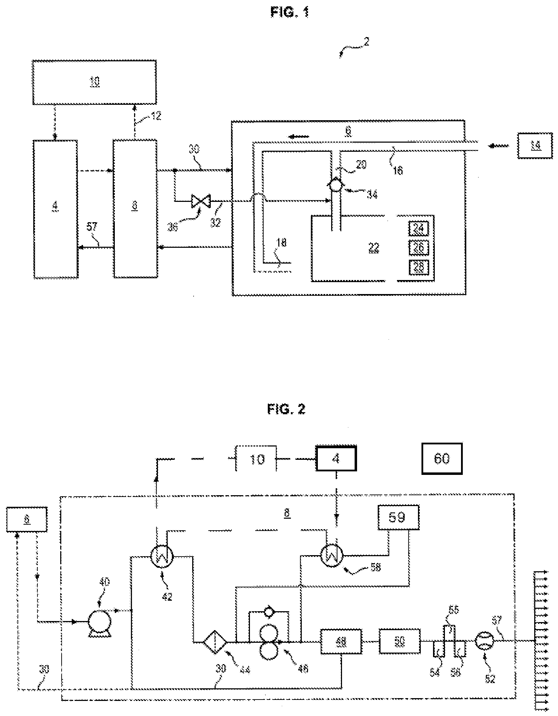

On a illustré à la figure 1 un aéronef selon un mode de réalisation de l'invention, tel qu'un avion 2. Cet avion comprend plusieurs moteurs 4 par exemple des turboréacteurs. On suppose par exemple que l'avion dispose d'au moins un moteur de chaque côté d'un fuselage de l'avion.

L'avion comprend aussi des réservoirs de carburant dont l'un d'eux 6 est illustré sur les figures. Il est équipé également d'un système d'injection de carburant dans le moteur 8 qui assure aussi un échange de chaleur avec un fluide de refroidissement formé par de l'huile circulant à partir d'un réservoir d'huile 10. Ainsi, comme illustré à la figure 1, avec les flèches en traits pointillés, l'huile 12 passe du réservoir d'huile 10 dans le moteur 4 pour le refroidir, puis dans le système d'injection 8 pour réchauffer le carburant qui traverse ce dernier en vue d'alimenter le moteur 4. L'huile retourne enfin dans son réservoir 10. Le circuit du carburant a été sommairement illustré sur cette figure.

L'avion dispose d'une embouchure de remplissage en carburant 14 pour alimenter le réservoir en carburant depuis l'extérieur de l'avion. Elle communique avec une conduite de remplissage 16 s'étendant à l'extérieur et à l'intérieur du réservoir 6 jusqu'à une extrémité terminale 18 de la conduite débouchant dans le réservoir. Une conduite de mesure 20 s'étend depuis une portion médiane de la conduite de remplissage 16 et dérive une partie du flux de carburant de cette dernière vers une chambre de mesure 22 s'étendant à l'intérieur du réservoir 6 et communiquant avec ce dernier de sorte que le carburant peut librement passer de la chambre au reste du réservoir et inversement. Cette chambre 22 est équipée de capteurs pour mesurer des caractéristiques du carburant dans le réservoir. Dans le présent exemple, il s'agit respectivement d'un capteur de masse volumique 24, d'un capteur d'une constante diélectrique 26 et d'un capteur de température 28.

Le circuit du carburant est illustré en traits pleins sur la figure 1. Ainsi le carburant passe du réservoir 6 vers le système d'injection 8, puis est injecté par ce dernier dans le moteur 4 par la conduite d'injection 57. Comme le carburant arrive fréquemment en excès dans le système d'injection 8, une partie en est renvoyée vers le réservoir 6 via une conduite de réintroduction 30 qui débouche directement dans le réservoir.

Dans le présent exemple, cette conduite de réintroduction est équipée d'une conduite de dérivation qui forme une conduite d'introduction 32 qui la met en communication directement avec une partie médiane de la conduite de mesure 20. La conduite d'introduction est reliée à la conduite de réintroduction dans une zone située entre le système 8 et le réservoir 6 dans le présent exemple. De la sorte, le carburant en passant de la conduite d'introduction 32 dans la conduite de mesure 20 est directement introduit dans la chambre 22 sans passer par le volume général du réservoir et sans se mêler au reste du carburant qui s'y trouve. La conduite de mesure 20 est équipée d'un clapet anti-retour 34 pour éviter qu'à cette occasion du carburant remonte dans la conduite de remplissage 16. Le clapet anti-retour 34 ne s'ouvre qu'en circonstances de remplissage du réservoir depuis extérieur de l'aéronef. Enfin, la conduite d'introduction 32 est équipée d'une vanne 36 permettant d'interrompre à volonté le passage de carburant dans cette dernière.

La chambre 22 est par exemple réalisée comme décrit dans le document WO 2018/002682 afin que la modification du circuit de carburant pour la mise en œuvre de l'invention puisse se limiter principalement à l'adjonction de la conduite 32 avec sa vanne 36.

Une version plus détaillée du système d'injection 8 est illustrée à la figure 2. Le carburant provenant du réservoir 6 traverse une pompe centrifuge à basse pression 40 puis un échangeur de chaleur 42 avec l'huile, un filtre 44 et une pompe à haute pression 46. Dans la suite du circuit qui est à haute pression, le carburant traverse un doseur de carburant 48 puis un clapet de coupure 50, un débitmètre 52, puis arrive dans les injecteurs.

L'huile passe du réservoir 10 à l'échangeur 58 puis à l'échangeur 42 pour être ensuite dirigée vers le moteur 4.

En aval de la pompe 46 et en amont du doseur 48, une partie du carburant est dérivée vers un échangeur thermique avec l'huile 58 puis vers des servovalves de vérins 59 pour être enfin réintroduite dans le circuit basse pression en amont de la pompe 46. Ces vérins sont des vérins du moteur dans lesquels le carburant est utilisé comme fluide hydraulique (il s'agit par exemple d'un vérin de commande de prélèvement d'air).

Une partie du carburant se trouvant dans le doseur 48 est renvoyée par la conduite de réintroduction 30 jusqu'au réservoir 6. La conduite 30 est à basse pression et est aussi appelée conduite de recirculation du carburant. Elle sert à retourner en amont de la pompe haute pression 46 l'excès de carburant pompé puisque, selon les phases de fonctionnement du moteur, une partie plus ou moins importante du débit fourni par cette pompe est en excès par rapport au débit que doit fournir le doseur à la chambre de combustion du moteur. Le carburant retourné en amont de cette pompe peut être en totalité réintroduit dans le circuit en aval de la pompe basse pression 40 mais il est aussi possible de réintroduire tout ou partie de ce retour de carburant dans le réservoir de carburant 6, comme c'est le cas en l'espèce.

La conduite d'injection 57 portant le débitmètre 52 est également équipée de deux capteurs de température 54, 55 et d'un capteur de constante diélectrique 56.

Le carburant est en l'espèce du kérosène mais il pourrait s'agir d'un mélange de kérosène avec du biocarburant ou encore de biocarburant à 100 %.

Enfin l'avion comprend des moyens de commande informatique 60 comprenant des moyens de traitement et une ou plusieurs mémoires, et reliés aux différents éléments de l'avion. Ces moyens sont configurés de façon à mettre en œuvre à bord de l'avion le procédé comprenant les étapes qui vont être maintenant présentées.

Dans une première étape, on mesure à un premier instant :

- une première valeur de masse volumique $D_1$,
- une première valeur de constante diélectrique $K_1$ et
- une première valeur de température $T_1$.

Ces mesures sont effectuées au moyen des capteurs 24, 26 et 28 de la chambre 22 et concernent le carburant se situant dans la chambre, à l'intérieur du réservoir 6. Elles sont effectuées alors que la vanne de retour de carburant 36 est fermée.

Ensuite, on introduit, dans la chambre 22, du carburant provenant du système d'injection 8. Pour cela, on ouvre la vanne 36, ce qui provoque un afflux de carburant dans la conduite d'introduction 32 puis directement dans la conduite de mesure 20 jusque dans la chambre 22. Comme ce carburant provient du système d'injection 8, il se trouve à une température supérieure à celle du carburant se trouvant initialement dans la chambre 22. Cela engendre donc une modification de la température du carburant dans la chambre 22. On met ici en œuvre le mode remplacement précité avec en outre un peu de mélange et d'échange thermique.

On observe aussi que, ensuite, à l'arrêt de l'entrée de carburant par le conduit, c'est-à-dire avec la vanne 36 fermée, le carburant du réservoir « pousse » celui de la chambre pour prendre sa place. Cela permet un fonctionnement cyclique, pour la mesure alternée des caractéristiques du carburant du réservoir et de celui revenant du système d'injection.

Ensuite, à un deuxième instant, on mesure dans la chambre au moyen des mêmes capteurs :

- une deuxième valeur de masse volumique $D_2$,
- une deuxième valeur de constante diélectrique $K_2$ et
- une deuxième valeur de température $T_2$ du carburant.

Ce deuxième instant fait suite à l'arrivée du carburant réchauffé de sorte que les première et deuxième valeurs de température $T_1$, $T_2$ sont différentes. Il en va de même pour les autres premières et deuxièmes valeurs.

Comme on le voit, dans cet exemple, on mesure donc les première et deuxième valeurs de masse volumique $D_1$, $D_2$ au moyen du même capteur de masse volumique 24, les première et deuxième valeurs de constante diélectrique $K_1$, $K_2$ au moyen du même capteur de constante diélectrique 26, et les première et deuxième valeurs de température $T_1$, $T_2$ au moyen du même capteur de température 28.

Dans une étape suivante, à partir des premières et deuxièmes valeurs, on détermine les paramètres des fonctions $f_1$, $f_2$ et $f_3$ telles que :

$$D = f_1(T),\ D = f_2(K)\ \text{et}\ K = f_3(T)$$

permettant respectivement de calculer :

- une masse volumique D à partir d'une température T,
- une masse volumique D à partir d'une constante diélectrique K, et
- une constante diélectrique K en fonction d'une température T.

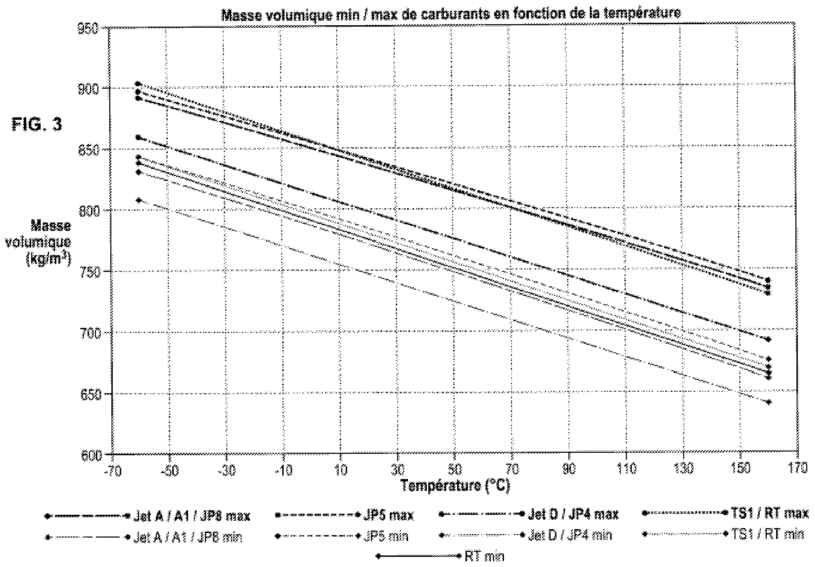

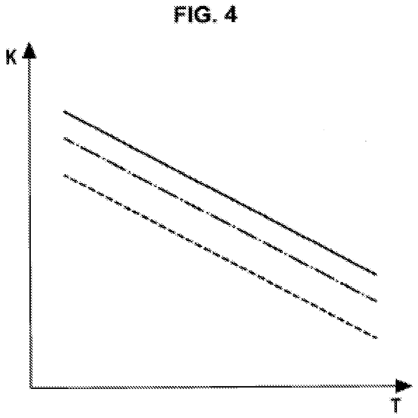

Ces trois fonctions sont celles qui ont été présentées plus haut. $f_1$ et $f_3$ ont une équation affine linéaire classique de type y = cx + e. Leurs graphes sont illustrés aux figures 3 et 4 respectivement pour différents types de carburants utilisés dans les moteurs d'avion.

La deuxième fonction $f_2$ est celle de la formule précitée dérivée de la formule générique dite de « Clausius-Mossotti » et a une équation du type :

$$D = (K-1)/[A+B(K-1)]$$

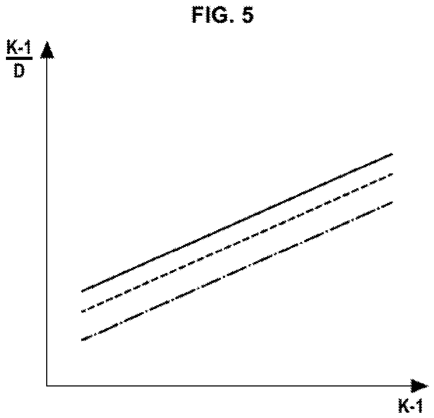

Si on suppose que x = K-1 et que y = (K-1)/D comme c'est le cas dans le document US2016/0123860, on obtient une formule affine linéaire du type y = cx + e, dont le graphe est illustré à la figure 5.

Il importe d'observer que l'utilisation d'équations affines en l'espèce pour les trois formules est un choix et que d'autres types de formules sont envisageables.

Dans ces conditions, en connaissant les premières et deuxièmes valeurs mesurée, le calculateur est en mesure de déterminer les paramètres c et e pour chacune des deux fonctions $f_1$, $f_3$ et les paramètres A et B pour la fonction $f_2$. De la sorte, les trois fonctions ou lois régissant les relations entre les caractéristiques du carburant sont déterminées. Ainsi les trois grandeurs mesurées à deux températures différentes permettent de caractériser précisément le carburant et de prédire l'évolution de l'une des grandeurs à partir de l'une des autres grâce aux trois fonctions.

Dans une étape suivante, on mesure dans la conduite 57 d'injection du carburant dans le moteur au moyen du débitmètre 52 et des capteurs 54, 55 et 56, au sujet du carburant de la conduite :

- une valeur de débit volumique DV,
- des troisième et quatrième valeurs de température $T_3$, $T_4$, et
- une troisième valeur de constante diélectrique $K_3$.

Ensuite, on détermine si une différence $T_3$-$T_4$ entre les troisième et quatrième valeurs de température dépasse en valeur absolue un seuil prédéterminé. Ce seuil est choisi en l'espèce comme égal au double de l'intervalle de tolérance associé à chaque capteur de température 54, 55. Mais il est possible de prendre en compte une autre valeur de seuil.

Par ailleurs, à partir des valeurs respectives $T_3$, $T_4$ et $K_3$ et au moyen des fonctions $f_1$, $f_2$ et $f_3$, on calcule des valeurs de test $D_a$, $D_b$, $D_c$ de la masse volumique comme suit :

$$D_a=f_1(T_3) \quad D_b=f_2(T_4) \quad D_c=f_3(K)$$

Ensuite, pour chaque paire de valeurs de test considérées deux à deux, on détermine si une différence en valeur absolue entre les valeurs de test dépasse un seuil prédéterminé. On compare donc successivement à ce seuil $|D_a$-$D_b|$, $|D_a$-$D_c|$ et $|D_b$-$D_c|$.

Le résultat de ces quatre tests est ensuite pris en compte pour déterminer la valeur de masse volumique $D_3$ à considérer dans la suite du procédé.

Dans le présent exemple, une table de vérité est prédéterminée pour répondre à tous les cas rencontrés. Les noms donnés à ces tests et la table sont présentés ci-après :

```
T_valid = Si (|T-T'|<= Ecart autorisé) alors OK (1/Vrai/true) sinon NOK (0/faux/false)

Dab_valid = Si (|Da-Db|<= Ecart autorisé) alors OK (1/Vrai/true) sinon NOK(0/faux/false)

Dac_valid = Si (|Da-Dc|<= Ecart autorisé) alors OK (1/Vrai/true) sinon NOK(0/faux/false)

Dbc_valid = Si (|Db-Dc|<= Ecart autorisé) alors OK (1/Vrai/true) sinon NOK(0/faux/false)
```

Table de vérité

| | | Dac_Valid Dbc_Valid | | | |
|---|---|---|---|---|---|
| | D utilisé | 00 | 10 | 01 | 11 |
| | 00 | Dc | $\underline{(D_a+D_c)/2}$ | $\underline{(D_b+D_c)/2}$ | $D_c$ |
| | 10 | Ddéfaut | $D_a$ | $D_b$ | $D_c$ |
| T_Valid Dab_Va lid | 01 | Ddéfaut | $D_a$ | $D_b$ | $D_c$ |
| | 11 | $\underline{(D_a+D_b)/2}$ | $(D_a+D_b)/2$ | $(D_a+D_b)/2$ | $(D_a+D_b+D_c)/3$ |

Dans chaque case de la table se trouve la valeur de masse volumique D qui sera prise en compte pour la suite du procédé en fonction des résultats des tests. (Certaines valeurs sont soulignées pour des raisons expliquées plus loin). Par exemple, à l'intersection de la ligne « 10 » et de la colonne « 01 », la valeur de masse volumique utilisée pour $D_3$ est $D_b$. Il s'agit de la situation dans laquelle on cumule les résultats suivants :

- le test sur les températures donne la valeur « vrai »,
- $|D_a$-$D_b|$ dépasse le seuil,
- $|D_a$-$D_c|$ dépasse le seuil, et
- $|D_b$-$D_c|$ ne dépasse pas le seuil.

Comme on le voit, dans certains cas, c'est l'une des valeurs suivantes qui est utilisée pour $D_3$ : $D_a$, $D_b$, $D_c$, $(D_a+D_b)/2$, $(D_a+D_c)/2$, $(D_b+D_c)/2$, ou $(D_a+D_b+D_c)/3$.

Dans les autres cas, qui correspondent au mode dégradé en présence d'au moins deux pannes, c'est la valeur par défaut qui est utilisée. Il s'agit ici en première intention d'une autre valeur obtenue lors de la mise en œuvre du procédé de l'invention sur l'autre moteur de l'aéronef situé de l'autre côté du fuselage. Si celle-ci n'est pas non plus disponible, il s'agit d'une valeur calculée à partir d'une fonction par défaut donnant les caractéristiques d'un carburant standard et stockée dans la mémoire du calculateur sans prendre en compte les résultats des mesures des capteurs de la chambre 22. En variante, on peut utiliser directement cette dernière valeur par défaut sans utiliser la valeur donnée pour l'autre moteur. La valeur par défaut tient compte des marges nécessaires pour garantir la fiabilité et la sécurité.

Comme on le voit sur cette table, on détermine donc la valeur de masse volumique $D_3$ dans certains cas sans prendre en compte une, deux ou trois des valeurs de test $D_a$, $D_b$ et $D_c$.

Dans le présent mode de mise en œuvre, la mesure de deux valeurs de température $T_3$ et $T_4$ et d'une valeur de constante diélectrique $K_3$ dans la conduite d'injection 57 permet une redondance qui rend possible en retour de détecter la survenue d'une anomalie ou d'une panne, voire d'une panne franche correspondant à la fourniture d'une mesure erronée par un capteur. Le cas d'une panne franche est celui illustré dans les trois cases soulignées qui sont les cas (00, 10), (00, 01) et (11, 00). On voit aussi que seule la dernière case en bas à droite de la table est associé à l'absence de toute anomalie et prend en compte les trois valeurs $D_a$, $D_b$ et $D_c$ pour le calcul de la masse volumique. La détection d'une anomalie ou d'une panne permet d'écarter pour la suite du procédé la ou les valeurs suspectes comme provenant d'une mesure erronée.

Dans une dernière étape, à partir des valeurs de débit volumique DV et de masse volumique $D_3$ ainsi déterminées, on détermine un débit massique DM du carburant dans la conduite d'injection 57.

Cette connaissance du débit massique du carburant dans les conditions d'injection dans le moteur 4 permet un dosage plus précis sans compromettre les performances, la fiabilité et la sécurité et en réduisant la marge de surconsommation.

L'agencement illustré sur la figure 1 est particulièrement bien adapté à la détermination des caractéristiques du carburant à partir des mesures effectuées dans le réservoir 6 afin d'en tenir compte pour la détermination de ses caractéristiques dans la conduite d'injection 57, laquelle est intéressante pour un dosage précis du carburant injecté.

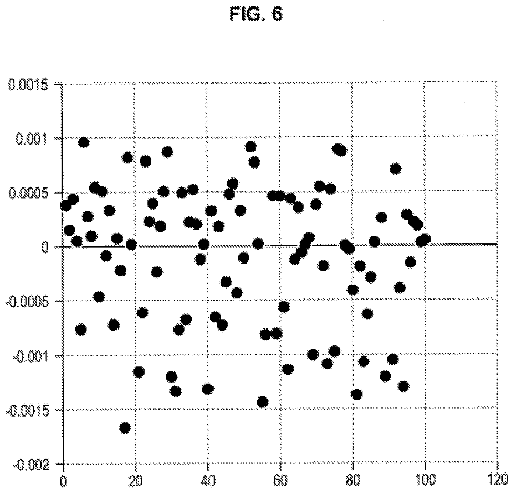

On a illustré à la figure 6 le résultat d'une simulation du procédé de l'invention mettant en œuvre cent tirages aléatoires sur les valeurs $T_3$, $T_4$ et K générant des erreurs sur ces dernières par rapport aux valeurs attendues pour un carburant de masse volumique prédéterminée $D_p$. Au moyen de la mise en œuvre du procédé ci-dessus, une valeur de masse volumique a été obtenue $D_d$ et est comparée avec cette valeur prédéterminée $D_p$. C'est la différence entre ces deux valeurs qui est illustrée en ordonnée sur la figure, le numéro du tirage figurant en abscisse. On observe que la différence, en valeur absolue, ne dépasse jamais 2/1000, ce qui montre la fiabilité du procédé de l'invention.

Bien entendu, on pourra apporter à l'invention de nombreuses modifications sans sortir du cadre de celle-ci.

De nombreuses stratégies différentes sont possibles pour déterminer la masse volumique du carburant à partir des grandeurs mesurées sur la conduite d'injection 57. Si l'on utilise une table, celle-ci pourra être différente de la table présentée plus haut. Par exemple, dans certaines des cases, on pourra prévoir d'utiliser la valeur par défaut là où elle ne l'est pas actuellement ou encore d'autres valeurs que celles qui y figurent. On pourrait aussi se dispenser de calculer une moyenne entre certaines valeurs ou toutes les valeurs comme c'est le cas dans certaines des cases et y substituer simplement l'une des valeurs.

On pourrait se dispenser de certaines des redondances.

A titre d'exemple aussi, la valeur de la constante diélectrique obtenue par calcul à partir de la température mesurée n'est pas utilisée dans la stratégie présentée ci-dessus pour déterminer la masse volumique à prendre en compte. Mais elle pourrait être utilisée dans une autre stratégie, par exemple en comparant cette valeur calculée avec la valeur de la constante mesurée.

**Revendications**

1. Procédé pour déterminer des caractéristiques d'un carburant alimentant un moteur (4) d'aéronef (2), procédé dans lequel, à bord de l'aéronef, on met en œuvre les étapes suivantes dans l'ordre suivant :

   - on mesure une première valeur de masse volumique ($D_1$), une première valeur de constante diélectrique ($K_1$) et une première valeur de température ($T_1$) du carburant à un premier instant,
   - on mesure une deuxième valeur de masse volumique ($D_2$), une deuxième valeur de constante diélectrique ($K_2$) et une deuxième valeur de température ($T_2$) du carburant à un deuxième instant choisi de sorte que les première et deuxième valeurs de température ($T_1$, $T_2$) soient différentes ;
   - à partir des premières et deuxièmes valeurs, on détermine des paramètres d'au moins une fonction permettant de calculer une masse volumique (D) à partir d'une température (T) ou d'une constante diélectrique (K) ;
   - on mesure une valeur de débit volumique (DV) et au moins l'une parmi une troisième valeur de température ($T_3$) et une troisième valeur de constante diélectrique ($K_3$) du carburant dans une conduite (57) d'injection du carburant dans le moteur ;
   - en tenant compte de la troisième valeur ou de l'une au moins des troisièmes valeurs, et d'au moins une des fonctions, on détermine une valeur de masse volumique ($D_3$) du carburant, et
   - à partir des valeurs de débit volumique et de masse volumique ($D_3$), on détermine un débit massique (DM) du carburant dans la conduite d'injection (57).

**2.** Procédé selon la revendication précédente dans lequel on mesure les première et deuxième valeurs de masse volumique ($D_1$, $D_2$) au moyen d'un même capteur de masse volumique (24), les première et deuxième valeurs de constante diélectrique ($K_1$, $K_2$) au moyen d'un même capteur de constante diélectrique (26), et les première et deuxième valeurs de température ($T_1$, $T_2$) au moyen d'un même capteur de température (28).

**3.** Procédé selon l'une quelconque des revendications précédentes dans lequel, après le premier instant et avant le deuxième instant, on met en œuvre une étape engendrant une modification d'une température du carburant dans une chambre (22) où sont effectuées les mesures aux premier et deuxième instants, notamment on introduit, dans l'enceinte, du carburant provenant d'un système d'injection de carburant (8) dans le moteur.

**4.** Procédé selon l'une quelconque des revendications précédentes dans lequel on met en œuvre les deux premières étapes de la revendication 1 dans un réservoir de carburant (6).

**5.** Procédé selon l'une quelconque des revendications précédentes dans lequel, au moyen des premières et deuxièmes valeurs, on détermine des paramètres d'une fonction permettant de calculer une constante diélectrique (K) en fonction d'une température (T).

**6.** Procédé selon l'une quelconque des revendications précédentes dans lequel on mesure une quatrième valeur de température ($T_4$) du carburant dans la conduite d'injection (57) et notamment on détermine si une différence entre les troisième et quatrième valeurs de température dépasse un seuil prédéterminé.

**7.** Procédé selon l'une quelconque des revendications précédentes dans lequel :

- à partir des troisièmes valeurs respectives et au moyen des fonctions, on calcule des valeurs de test ($D_a$, $D_b$, $D_c$) de la masse volumique ;
- pour la ou chaque paire de valeurs de test considérées deux à deux, on détermine si une différence entre les valeurs de test dépasse un seuil prédéterminé, et
- on détermine la valeur de masse volumique du carburant en fonction du résultat de cette détermination.

**8.** Procédé selon la revendication précédente dans lequel, à l'issue des deux premières étapes de la revendication précédente, on détermine la valeur de masse volumique sans prendre en compte une, deux ou trois des valeurs de test ($D_a$, $D_b$, $D_c$).

**9.** Procédé selon l'une quelconque des revendications précédentes dans lequel on détermine la valeur de masse volumique ($D_3$) en prenant en compte au moins une autre valeur obtenue lors de la mise en œuvre du procédé selon l'une quelconque des revendications précédentes pour un autre moteur (4) de l'aéronef ou en prenant en compte au moins une autre fonction prédéterminée, notamment sans prendre en compte les valeurs de test ($D_a$, $D_b$, $D_c$).

**10.** Aéronef (2) comprenant :

- au moins un moteur (4),
- au moins un réservoir de carburant (6),
- un système (8) d'injection du carburant dans le moteur, le système d'injection (8) comprenant une conduite d'injection (57),
- des organes (24, 26, 28) de mesure d'une masse volumique, d'une constante diélectrique et d'une température du carburant,
- un débitmètre (52) pour la mesure d'un débit volumique, le débitmètre (52) et au moins un parmi un capteur de température (54, 55) et un capteur de constante diélectrique (56) étant portés par la conduite d'injection (57), et
- un organe de commande (60) configuré pour commander l'exécution des étapes du procédé selon l'une quelconque des revendications précédentes.

**Patentansprüche**

**1.** Verfahren zur Bestimmung der Eigenschaften eines Kraftstoffs, der ein Triebwerk (4) eines Flugzeugs (2) versorgt, wobei bei dem Verfahren an Bord des Flugzeugs die folgenden Schritte in der folgenden Reihenfolge durchgeführt werden:

- Messen eines ersten Dichtewerts ($D_1$), eines ersten Dielektrizitätskonstantenwerts ($K_1$) und eines ersten Temperaturwerts ($T_1$) des Kraftstoffs zu einem ersten Zeitpunkt,

- Messen eines zweiten Dichtewerts ($D_2$), eines zweiten Dielektrizitätskonstantenwerts ($K_2$) und eines zweiten Temperaturwerts ($T_2$) des Kraftstoffs zu einem zweiten Zeitpunkt, der so gewählt ist, dass der erste und der zweite Temperaturwert ($T_1$, $T_2$) unterschiedlich sind;

- ausgehend von den ersten und zweiten Werten, Bestimmen von Parametern mindestens einer Funktion, die gestattet, eine Dichte (D) aus einer Temperatur (T) oder einer Dielektrizitätskonstante (K) zu berechnen;

- Messen eines Volumenstromwerts (DV) und mindestens eines Werts von einem dritten Temperaturwert ($T_3$) und einem dritten Dielektrizitätskonstantenwert ($K_3$) des Kraftstoffs in einer Einspritzleitung (57) des Kraftstoffs in das Triebwerk;

- unter Berücksichtigung des dritten Werts oder mindestens von einem der dritten Werte und mindestens einer der Funktionen, Bestimmen eines Dichtwerts ($D_3$) des Kraftstoffs, und

- ausgehend von den Volumenstrom- und Dichtewerten ($D_3$), Bestimmen eines Massenstroms (DM) des Kraftstoffs in der Einspritzleitung (57).

2. Verfahren nach vorhergehendem Anspruch, wobei der erste und der zweite Dichtewert ($D_1$, $D_2$) mit demselben Dichtesensor (24), der erste und zweite Dielektrizitätskonstantenwert ($K_1$, $K_2$) mit demselben Dielektrizitätskonstantensensor (26) und der erste und zweite Temperaturwert ($T_1$, $T_2$) mit demselben Temperatursensor (28) gemessen werden.

3. Verfahren nach einem der vorhergehenden Ansprüche, wobei nach dem ersten Zeitpunkt und vor dem zweiten Zeitpunkt ein Schritt durchgeführt wird, der eine Änderung der Kraftstofftemperatur in einer Kammer (22) bewirkt, wo die Messungen zum ersten und zweiten Zeitpunkt durchgeführt werden, insbesondere indem in den Kammer Kraftstoff aus einem Kraftstoffeinspritzsystem (8) in das Triebwerk eingeleitet wird.

4. Verfahren nach einem der vorhergehenden Ansprüche, wobei die beiden ersten Schritte von Anspruch 1 in einem Kraftstoffbehälter (6) durchgeführt werden.

5. Verfahren nach einem der vorhergehenden Ansprüche, wobei anhand der ersten und zweiten Werte, Parameter einer Funktion bestimmt werden, die gestattet, eine Dielektrizitätskonstante (K) in Abhängigkeit von einer Temperatur (T) zu berechnen.

6. Verfahren nach einem der vorhergehenden Ansprüche, wobei ein vierter Temperaturwert ($T_4$) des Kraftstoffs in der Einspritzleitung (57) gemessen wird und insbesondere bestimmt wird, ob eine Differenz zwischen dem dritten und vierten Temperaturwert einen vorgegebenen Schwellenwert überschreitet.

7. Verfahren nach einem der vorhergehenden Ansprüche, wobei:

- ausgehend von den jeweiligen dritten Werten und anhand der Funktionen Testwerte ($D_a$, $D_b$, $D_c$) der Dichte berechnet werden,
- für das oder jedes Paar von Testwerten, die paarweise betrachtet werden, bestimmt wird, ob eine Differenz zwischen den Testwerten einen vorgegebenen Schwellenwert überschreitet, und
- der Dichtewert des Kraftstoffs in Abhängigkeit vom Ergebnis dieser Bestimmung bestimmt wird.

8. Verfahren nach vorhergehendem Anspruch, wobei nach Abschluss der beiden ersten Schritte des vorhergehenden Anspruchs der Dichtewert bestimmt wird, ohne einen, zwei oder drei der Testwerte ($D_a$, $D_b$, $D_c$) zu berücksichtigen.

9. Verfahren nach einem der vorhergehenden Ansprüche, wobei der Dichtewert ($D_3$) unter Berücksichtigung mindestens eines weiteren Werts bestimmt wird, der bei der Durchführung des Verfahrens nach einem der vorhergehenden Ansprüche für ein weiteres Triebwerk (4) des Flugzeugs erhalten wurde oder unter Berücksichtigung mindestens einer weiteren vorbestimmten Funktion, insbesondere ohne Berücksichtigung der Testwerte ($D_a$, $D_b$, $D_c$).

10. Flugzeug (2), umfassend:

- mindestens ein Triebwerk (4),
- mindestens einen Kraftstofftank (6),
- ein System (8) zum Einspritzen des Kraftstoffs in das Triebwerk, wobei das Einspritzsystem (8) eine Einspritzleitung (57) umfasst,

- Organe (24, 26, 28) zum Messen einer Dichte, einer Dielektrizitätskonstante und einer Temperatur des Kraftstoffs,
- einen Durchflussmesser (52) zum Messen eines Volumendurchflusses, wobei der Durchflussmesser (52) und mindestens einer von einem Temperatursensor (54, 55) und einem Sensor der Dielektrizitätskonstante (56) von der Einspritzleitung (57) getragen werden, und
- ein Steuerorgan (60), das ausgelegt ist, um die Ausführung der Schritte des Verfahrens nach einem der vorhergehenden Ansprüche zu steuern.

**Claims**

1. Method for determining characteristics of a fuel supplying an engine (4) of an aircraft (2), in which method, on board the aircraft, the following steps are carried out in the following order:

   - measuring a first density value ($D_1$), a first dielectric constant value ($K_1$), and a first temperature value ($T_1$) of the fuel at a first point in time,
   - measuring a second density value ($D_2$), a second dielectric constant value ($K_2$) and a second temperature value ($T_2$) of the fuel at a second instant chosen so that the first and second temperature values ($T_1$, $T_2$) are different;
   - from the first and second values, determining parameters of at least one function for calculating a density (D) from a temperature (T) or a dielectric constant (K);
   - measuring a volumetric flow rate (DV) and at least one of a third temperature value ($T_3$) and a third dielectric constant value ($K_3$) of the fuel in a fuel injection line (57) in the engine;
   - taking into account the third value or at least one of the third values, and at least one of the functions, determining a density value ($D_3$) of the fuel, and
   - based on the volume flow and density values ($D_3$), determining a mass flow (DM) of the fuel in the injection line (57).

2. Method according to the previous claim, wherein the first and second density values ($D_1$, $D_2$) are measured using the same density sensor (24), the first and second dielectric constant values ($K_1$, $K_2$) are measured using the same dielectric constant sensor (26), and the first and second temperature values ($T_1$, $T_2$) are measured using the same temperature sensor (28).

3. Method according to any of the preceding claims, wherein, after the first instant and before the second instant, a step is performed that causes a change in the temperature of the fuel in a chamber (22) where the measurements are taken at the first and second moments, in particular by introducing fuel from a fuel injection system (8) in the engine into the chamber.

4. Method according to any of the preceding claims, wherein the first two steps of claim 1 are implemented in a fuel tank (6).

5. Method according to any of the preceding claims, wherein, using the first and second values, parameters of a function are determined for calculating a dielectric constant (K) as a function of temperature (T).

6. Method according to any of the preceding claims, wherein a fourth temperature value ($T_4$) of the fuel in the injection line (57) is measured and, in particular, it is determined whether a difference between the third and fourth temperature values exceeds a predetermined threshold.

7. Method according to any of the preceding claims, wherein:

   - test values ($D_a$, $D_b$, $D_c$) of the density are calculated from the respective third values and by means of the functions;
   - for the or each pair of test values considered in pairs, it is determined whether a difference between the test values exceeds a predetermined threshold, and
   - the density value of the fuel is determined based on the result of this determination.

8. Method according to the previous claim, wherein, at the end of the first two steps of the previous claim, the density value is determined without taking into account one, two, or three of the test values ($D_a$, $D_b$, $D_c$).

9. Method according to any of the previous claims, wherein the density value ($D_3$) is determined by taking into account at least one other value obtained during the implementation of the method according to any of the preceding claims for another engine (4) of the aircraft or by taking into account at least one other predetermined function, in particular without taking into account the test values ($D_a$, $D_b$, $D_c$).

10. Aircraft (2) comprising:

- at least one engine (4),
- at least one fuel tank (6),
- a system (8) for injecting fuel into the engine, the injection system (8) comprising an injection line (57),
- components (24, 26, 28) for measuring the density, dielectric constant, and temperature of the fuel,
- a flow meter (52) for measuring a volume flow rate, the flow meter (52) and at least one of a temperature sensor (54, 55) and a dielectric constant sensor (56) being carried by the injection line (57), and
- a control device (60) configured to control the execution of the steps of the method according to any of the preceding claims.

EP 4 153 851 B1

FIG. 1

FIG. 2

**FIG. 3**

Masse volumique min / max de carburants en fonction de la température

FIG. 4

# FIG. 5

FIG. 6

## RÉFÉRENCES CITÉES DANS LA DESCRIPTION

**Documents brevets cités dans la description**

- US 8515694 B
- US 20160123860 A
- WO 2018002682 A